# FASCICULE DE BREVET EUROPEEN

(11) **EP 3 171 482 B1**
(45) Date de publication et mention de la délivrance du brevet: **14.03.2018**
(21) Numéro de dépôt: 16198047.9
(22) Date de dépôt: 09.11.2016
(51) Int. Cl.: H01M 10/42, H02J 7/00, H01M 10/44, B60L 11/18, H01M 10/48

(54) **BATTERIE ÉLECTRIQUE COMPORTANT UN SYSTÈME ÉLECTRONIQUE DE GESTION**
ELEKTRISCHE BATTERIE, DIE EIN ELEKTRONISCHES STEUERUNGSSYSTEM UMFASST
ELECTRIC BATTERY COMPRISING AN ELECTRONIC MANAGEMENT SYSTEM

(30) Priorité: 17.11.2015 FR 1561041
(43) Date de publication de la demande: 24.05.2017
(73) Titulaire: COMMISSARIAT À L'ÉNERGIE ATOMIQUE ET AUX ÉNERGIES ALTERNATIVES, 75015 Paris (FR)
(72) Inventeur: DESBOIS-RENAUDIN, Matthieu, 38250 VILLARD DE LANS (FR)
(74) Mandataire: Thibon, Laurent

(56) Documents cités:
- EP-A1- 1 942 568
- US-A- 5 747 968
- US-A1- 2013 026 992
- US-B1- 6 265 846

## Description

### Domaine

La présente demande concerne une batterie électrique comportant une pluralité de cellules de stockage d'énergie électrique et un système électronique de gestion de la batterie.

### Exposé de l'art antérieur

Une batterie électrique comprend classiquement une pluralité de cellules élémentaires de stockage d'énergie électrique rechargeables identiques ou similaires (piles, accumulateurs, super-condensateurs, etc.) reliées en série et/ou en parallèle entre deux bornes, respectivement positive et négative, de fourniture d'une tension. Lors de phases de décharge de la batterie, un courant circule de la borne positive vers la borne négative de la batterie, à travers une charge à alimenter. Lors de phases de recharge de la batterie, un chargeur applique un courant de recharge circulant de la borne négative vers la borne positive de la batterie (à travers le chargeur).

Une batterie comprend en outre généralement un système électronique de gestion adapté à mettre en oeuvre des opérations de contrôle de la recharge, de contrôle de la décharge et/ou d'équilibrage des cellules de la batterie. De façon classique, le dispositif électronique de gestion comprend, associé à chaque cellule, un ou plusieurs capteurs adaptés à mesurer un ou plusieurs paramètres physiques de la cellule, par exemple sa tension ou sa température. Les capteurs communiquent avec une unité de contrôle centralisée qui tient compte des valeurs mesurées pour commander en conséquence des actions telles que la diminution ou l'interruption du courant de recharge ou de décharge de la batterie, ou des actions d'équilibrage des cellules de la batterie.

Un problème qui se pose est celui de la lecture des valeurs de sortie des capteurs du dispositif de gestion, et de la transmission des valeurs lues à l'unité de contrôle centralisée.

Pour réaliser cette lecture, on peut prévoir une liaison filaire connectant chaque capteur à l'unité de contrôle. Le nombre de câbles et la longueur des câbles du dispositif de gestion sont alors élevés, ce qui entraîne un prix de revient élevé de la batterie et des risques de défaillance multipliés. En outre, lorsque les cellules de la batterie sont reliées en série et que chaque capteur a pour tension d'alimentation la tension de la cellule à laquelle il est associé, les valeurs de sortie des différents capteurs peuvent être référencées par rapport à des potentiels distincts, parfois relativement éloignés. Il faut alors prévoir des dispositifs d'isolation galvanique entre les sorties des capteurs et l'unité de contrôle, ce qui augmente encore la complexité et le prix de revient de la batterie.

D'autres systèmes de communication ont été proposés tels que des systèmes de communication sans fil, ou encore des systèmes de communication par courant porteur utilisant le chemin de puissance de la batterie pour transmettre les valeurs de sortie des capteurs. Ces systèmes présentent divers inconvénients, et notamment ceux d'être complexes et onéreux. Les documents EP1942568 et US2013026992 décrivent respectivement un exemple d'une batterie électrique comportant un système de gestion.

### Résumé

Ainsi, un mode de réalisation prévoit une batterie électrique comprenant : une pluralité de modules de stockage d'énergie électrique ; associé à chaque module, un circuit d'interconnexion comportant des premier et deuxième interrupteurs connectés en série entre une borne positive et une borne négative du module, les deuxièmes interrupteurs des différents circuits d'interconnexion étant connectés en série entre une borne positive et une borne négative de la batterie ; associé à chaque circuit d'interconnexion, un circuit autonome de contrôle adapté à commander l'ouverture du premier interrupteur et la fermeture du deuxième interrupteur de façon à shunter le module lorsque la tension aux bornes du module atteint un seuil ; et une unité de gestion connectée aux bornes positive et négative du système, adaptée, lorsqu'un module est shunté, à détecter une chute de tension correspondante entre les bornes positive et négative de la batterie, et à contrôler en conséquence un courant de recharge ou de décharge de la batterie.

Selon un mode de réalisation, la batterie ne comporte pas de liaison de communication de données entre les circuits de contrôle et l'unité de gestion.

Selon un mode de réalisation, la batterie ne comporte pas de liaison de communication de données entre les différents circuits de contrôle.

Selon un mode de réalisation, chaque circuit de contrôle est adapté à déterminer le sens du courant circulant sur le noeud intermédiaire entre les premier et deuxième interrupteurs du circuit d'interconnexion auquel il est associé.

Selon un mode de réalisation, chaque circuit de contrôle est adapté à commander l'ouverture du deuxième interrupteur et la fermeture du premier interrupteur lorsque le courant circulant sur le noeud intermédiaire du circuit d'interconnexion auquel il est associé change de sens.

Selon un mode de réalisation, l'unité de gestion est adaptée à réduire un courant de recharge ou de décharge de la batterie lorsqu'elle détecte le shuntage d'un module.

Selon un mode de réalisation, la batterie comprend en outre, associé à chaque module, un circuit de régulation adapté à appliquer une tension de régulation prédéfinie aux bornes du deuxième interrupteur du circuit d'interconnexion associé au module.

Selon un mode de réalisation, le circuit de régulation est adapté à commander le deuxième interrupteur à un état partiellement fermé pour générer la tension de régulation.

Selon un mode de réalisation, chaque circuit de contrôle est adapté à commander l'application de la tension de régulation aux bornes du deuxième interrupteur par le circuit de régulation correspondant, lorsque la tension aux bornes du module correspondant atteint un seuil et que le courant circulant dans le deuxième interrupteur est inférieur à un seuil.

Selon un mode de réalisation, les premiers et deuxièmes interrupteurs sont des transistors MOS.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique d'un exemple d'un mode de réalisation d'une batterie électrique comportant un système électronique de gestion ; et
la figure 2 est un schéma électrique partiel d'un autre exemple d'un mode de réalisation d'une batterie électrique comportant un système électronique de gestion.

### Description détaillée

De mêmes éléments ont été désignés par de mêmes références aux différentes figures. Sauf précision contraire, les expressions "approximativement", "sensiblement", et "de l'ordre de" signifient à 10 % près, de préférence à 5 % près. Dans la présente description, on utilise le terme "connecté" pour désigner une liaison électrique directe, sans composant électronique intermédiaire, par exemple au moyen d'une ou plusieurs pistes conductrices et/ou d'un élément de protection normalement conducteur de type fusible et/ou d'un ou plusieurs interrupteurs à l'état passant, et le terme "couplé" ou le terme "relié", pour désigner soit une liaison électrique directe (signifiant alors "connecté") soit une liaison via un ou plusieurs composants intermédiaires (résistance, diode, condensateur, etc.).

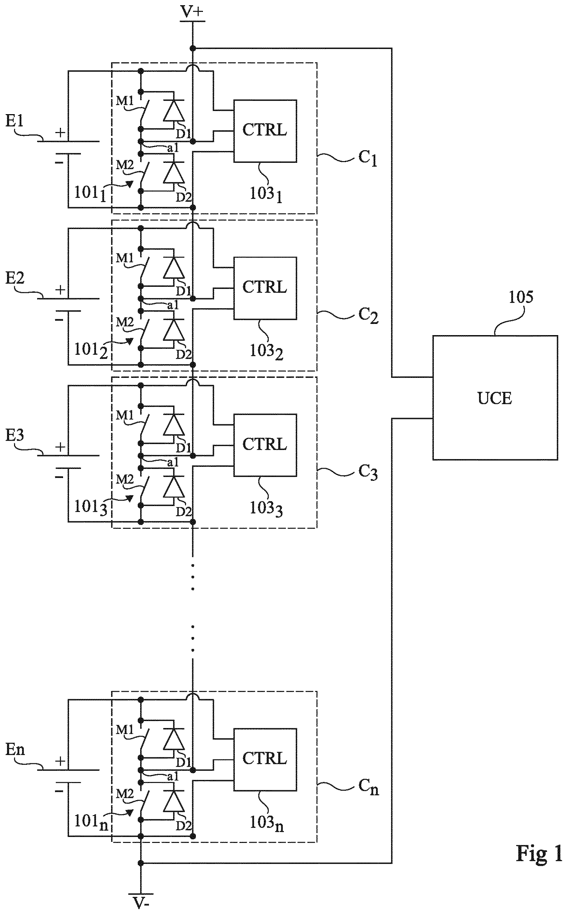

La figure 1 est un schéma électrique d'un exemple d'un mode de réalisation d'une batterie électrique comportant une pluralité de cellules élémentaires de stockage d'énergie électrique rechargeables et un système électronique de gestion de la batterie.

Dans cet exemple, la batterie comprend n modules de stockage d'énergie électrique Ei rechargeables, avec n entier, par exemple supérieur ou égal à 3, et i entier allant de 1 à n. Chaque module Ei comprend une ou plusieurs cellules élémentaires de stockage d'énergie électrique connectées en série et/ou en parallèle entre une borne positive (+) et une borne négative (-) du module. A titre d'exemple, chaque module Ei comprend une unique cellule élémentaire de stockage d'énergie électrique. A titre de variante, chaque module Ei comprend plusieurs cellules élémentaires, par exemple identiques ou similaires, connectées en parallèle entre la borne positive et la borne négative du module. Les n modules Ei de la batterie sont par exemple identiques ou similaires.

Dans la batterie de la figure 1, les modules Ei ne sont pas directement connectés deux à deux, mais sont reliés par l'intermédiaire d'éléments d'interconnexion commandables de la batterie. Plus particulièrement, la batterie de la figure 1 comprend, associé à chaque module Ei, un circuit d'interconnexion commandable 101ᵢ comportant deux interrupteurs M1 et M2 connectés en série entre la borne positive (+) et la borne négative (-) du module. L'interrupteur M1 est situé côté borne positive (+) du module, c'est-à-dire que ses noeuds de conduction sont connectés respectivement à la borne positive (+) du module et à un noeud intermédiaire a1 du circuit d'interconnexion. L'interrupteur M2 est situé côté borne négative (-) du module, c'est-à-dire que ses noeuds de conduction sont connectés respectivement à la borne négative (-) du module et au noeud intermédiaire a1 du circuit d'interconnexion 101ᵢ. Les interrupteurs M2 associés aux différents modules Ei de la batterie sont connectés en série entre une borne positive V+ et une borne négative V- de la batterie. Un tel mode d'interconnexion des cellules d'une batterie a déjà été proposé par le demandeur dans la demande de brevet FR2976743 déposée le 17 juin 2011. Dans l'exemple de la figure 1, chaque circuit d'interconnexion 101ᵢ comprend en outre une diode D1 connectée en parallèle de l'interrupteur M1, et une diode D2 connectée en parallèle de l'interrupteur M2. La diode D2 est connectée en direct entre la borne négative du module Ei et le noeud a1 du circuit d'interconnexion 101ᵢ, et la diode D1 est connectée en direct entre le noeud a1 et la borne positive du module Ei. A titre d'exemple, les interrupteurs M1 et M2 sont des transistors MOS, les diodes D1 et D2 étant les diodes intrinsèques drain/source des transistors M1 et M2 respectivement.

En fonctionnement normal, les interrupteurs M1 des différents circuits d'interconnexion 101i de la batterie sont fermés (c'est-à-dire à l'état passant), et les interrupteurs M2 sont ouverts (c'est-à-dire à l'état bloqué). Les modules Ei sont alors connectés en série entre les bornes positive V+ et négative V- de fourniture de la tension totale de la batterie.

La batterie de la figure 1 comprend en outre, associé à chaque circuit d'interconnexion 101ᵢ, un circuit autonome 103ᵢ (CTRL) de contrôle des interrupteurs M1 et M2 du circuit d'interconnexion 101ᵢ. Chaque circuit de contrôle 103ᵢ est connecté aux bornes positive et négative du module Ei correspondant, ainsi qu'aux bornes de commande des interrupteurs M1 et M2 du circuit d'interconnexion 101ᵢ correspondant. Par souci de simplification, les connexions entre les bornes de commande des interrupteurs M1, M2 et les circuits de contrôle 103ᵢ n'ont pas été représentées sur les figures. Chaque circuit de contrôle 103i comprend un capteur de tension (non représenté) adapté à mesurer la tension aux bornes du module Ei correspondant, ou, à minima un capteur de franchissement de seuil adapté à détecter que la tension aux bornes du module Ei atteint un seuil prédéfini. Le circuit de contrôle 103ᵢ est adapté à ouvrir l'interrupteur M1 et fermer l'interrupteur M2 du circuit d'interconnexion 101ᵢ lorsque la tension aux bornes du module Ei atteint un seuil, par exemple un seuil haut correspondant à un état chargé du module, ou un seuil bas (inférieur au seuil haut) correspondant à un état déchargé du module. Le circuit de contrôle 103ᵢ est configuré de façon que les interrupteurs M1 et M2 ne soient jamais commandés simultanément à l'état fermé, ce qui court-circuiterait le module Ei et pourrait endommager la batterie. Le circuit de contrôle 103ᵢ peut en outre comporter un ou plusieurs capteurs supplémentaires, par exemple un capteur de température, un capteur du courant, etc.

Par circuit autonome, on entend ici que les circuits de contrôle 103ᵢ ne reçoivent aucune information de la part d'une unité de contrôle centralisée, et ne communiquent pas les valeurs de sortie du ou des capteurs qu'ils comprennent à une unité de contrôle centralisée. En d'autres termes, aucune liaison de communication filaire ou autre n'est prévue entre les circuits de contrôle locaux 103ᵢ et une unité de contrôle centralisée. La batterie de la figure 1 ne comprend pas non plus de liaison de communication filaire ou autre entre les différents circuits de contrôle locaux 103ᵢ. Ainsi, la décision de commuter les interrupteurs M1 et M2 d'un circuit d'interconnexion 101ᵢ est prise localement par le circuit de contrôle 103ᵢ correspondant, en tenant compte uniquement des mesures effectuées par le ou les capteurs du circuit de contrôle 103ᵢ. A titre d'exemple, chaque circuit de contrôle 103ᵢ tire son alimentation du module Ei aux bornes duquel il est connecté.

Lorsque les interrupteurs M1 et M2 associés à un module Ei de la batterie sont respectivement à l'état ouvert et à l'état fermé, le module Ei se trouve shunté ou isolé du reste de la batterie, et ne contribue plus à la fourniture de la tension de sortie délivrée entre les bornes V+ et V- de la batterie. La tension de sortie de la batterie chute alors d'une valeur sensiblement égale à la valeur de la tension aux bornes du module Ei. Toutefois, le chemin de puissance de la batterie n'est pas interrompu et la batterie peut continuer à délivrer ou à recevoir de l'énergie, la borne positive du module Ei+1 se trouvant connectée à la borne négative du module Ei-1 par l'intermédiaire de l'interrupteur M1 du circuit d'interconnexion 101ᵢ₊₁ et de l'interrupteur M2 du circuit d'interconnexion 101ᵢ, tous deux à l'état fermé.

La batterie de la figure 1 comprend en outre une unité de contrôle électronique ou unité de gestion 105 (UCE). L'unité de gestion 105 est connectée à la borne positive V+ et à la borne négative V- de la batterie. L'unité de gestion 105 n'est en revanche connectée ni à des noeuds intermédiaires de l'association en série des modules Ei de la batterie, ni aux noeuds de commande des interrupteurs M1 et M2 des circuits d'interconnexion 101ᵢ, ni aux circuits de contrôle 103ᵢ associés aux circuits d'interconnexion 101ᵢ. L'unité de gestion 105 est adaptée, lorsqu'un module de stockage Ei est shunté, à détecter une chute de tension correspondante entre les bornes positive V+ et négative V- de la batterie, et à en déduire qu'un module Ei a été shunté. L'unité de gestion 105 comprend un capteur de tension (non représenté) mesurant la tension aux bornes de la batterie, et peut en outre comporter d'autres capteurs, par exemple un capteur du courant circulant entre les bornes V+ et V- de la batterie, un capteur de température, etc. L'unité de gestion 105 comprend en outre un circuit de traitement (non représenté), par exemple un microcontrôleur, recevant les mesures réalisées par le ou les capteurs de l'unité de gestion 105. L'unité de gestion 105 est adaptée à commander des actions telles que la diminution ou l'interruption du courant de recharge ou de décharge de la batterie.

Un avantage de la configuration de la figure 1 est que la longueur de câbles internes à la batterie est significativement réduite par rapport à des batteries dans lesquelles des liaisons filaires directes existent entre chaque module ou circuit d'interconnexion ou de contrôle associé au module, et une unité de gestion centralisée. Dans la batterie de la figure 1, le circuit d'interconnexion 101ᵢ et le circuit de contrôle 103ᵢ associés à chaque module Ei peuvent par exemple être disposés sur une même carte de circuit imprimé Cᵢ montée solidaire du module Ei, par exemple vissée ou soudée aux bornes positives et négatives du module Ei. Ainsi, seuls deux câbles connectés respectivement à la borne positive V+ et à la borne négative V- de la batterie relient l'unité de gestion 105 à l'ensemble des circuits d'interconnexion ou de contrôle associés aux différents modules Ei de la batterie.

Des exemples de procédés de contrôle ou gestion de la batterie de la figure 1 au moyen du système de gestion formé par les circuits d'interconnexion 101ᵢ, les circuits de contrôle 103ᵢ, et l'unité de gestion 105 lors de phases de recharge et de décharge de la batterie vont être décrits. Tous ces procédés de contrôle sont basés sur l'aptitude de l'unité de gestion 105 à détecter le shuntage d'un module Ei par détection d'une chute de tension correspondante entre les bornes V+ et V- de la batterie.

### Premier exemple - recharge de la batterie

Lors d'une phase de recharge de la batterie, un chargeur (non représenté) applique un courant de recharge entre la borne négative V- et la borne positive V+ de la batterie, éventuellement par l'intermédiaire de l'unité de gestion 105. Si la batterie fonctionne normalement, les interrupteurs M1 des circuits d'interconnexion 101ᵢ sont tous à l'état fermé, et les interrupteurs M2 des circuits d'interconnexion 101ᵢ sont tous à l'état ouvert, de sorte que le courant de recharge passe à travers tous les modules Ei de la batterie. Lorsque la tension d'un premier module Ei atteint un seuil prédéfini correspondant à sa tension de pleine charge, le circuit de contrôle 103ᵢ correspondant le détecte, et commande en conséquence l'ouverture de l'interrupteur M1 et la fermeture de l'interrupteur M2 du circuit d'interconnexion 101ᵢ associé au module. Le module Ei se trouve alors isolé du reste de la batterie, et la tension aux bornes de la batterie chute d'une valeur sensiblement égale à la tension du module Ei. L'unité de gestion 105 détecte cette chute de tension et peut en déduire que la fin de la phase de recharge de la batterie approche. A titre d'exemple, l'unité de gestion 105 peut alors commander la diminution du courant de recharge, de façon que la fin de la recharge soit réalisée sous un courant réduit par rapport au courant appliqué pendant le début de la phase de recharge. Chaque fois qu'un nouveau module Ei atteint sa tension de pleine charge, ce module est shunté, et la tension aux bornes de la batterie chute en conséquence. Lorsque la tension aux bornes de la batterie atteint une valeur sensiblement nulle, par exemple inférieure à 1 V, l'unité de gestion 105 peut en déduire que tous les modules Ei sont chargés, et interrompre en conséquence le courant de recharge. La batterie est alors chargée et équilibrée. Chaque module de contrôle 103ᵢ est par exemple adapté à détecter la fin de la recharge, par exemple au moyen d'un capteur du courant ou du signe du courant circulant sur le noeud a1 du circuit d'interconnexion 101ᵢ correspondant, et à commander en conséquence la réouverture de l'interrupteur M2 et la fermeture du transistor M1 du circuit d'interconnexion 101ᵢ, de façon à reconnecter les modules Ei en série entre les bornes V+ et V- de la batterie.

### Deuxième exemple - décharge de la batterie

Lors d'une phase de décharge de la batterie, un courant circule entre la borne positive V+ et la borne négative V- de la batterie à travers une charge non représentée, éventuellement par l'intermédiaire de l'unité de gestion 105. Si la batterie fonctionne normalement, les interrupteurs M1 des circuits d'interconnexion 101ᵢ sont tous à l'état fermé, et les interrupteurs M2 des circuits d'interconnexion 101ᵢ sont tous à l'état ouvert, de sorte que tous les modules Ei de la batterie contribuent à la fourniture du courant de décharge. Lorsque la tension d'un premier module Ei atteint un seuil prédéfini correspondant à son état déchargé, le circuit de contrôle 103ᵢ correspondant le détecte, et commande en conséquence l'ouverture de l'interrupteur M1 et la fermeture de l'interrupteur M2 du circuit d'interconnexion 101ᵢ associé au module. Le module Ei se trouve alors isolé du reste de la batterie, et la tension aux bornes de la batterie chute d'une valeur sensiblement égale à la tension du module Ei. L'unité de gestion 105 détecte cette chute de tension et peut en déduire que la batterie approche de son état déchargé. A titre d'exemple, l'unité de gestion 105 peut alors commander l'interruption du courant de décharge, et indiquer à l'utilisateur que la batterie doit être rechargée. A titre de variante, la décharge peut se poursuivre un certain temps, par exemple jusqu'à ce qu'un nombre prédéfini de modules Ei (par exemple les n modules Ei de la batterie) soient déchargés. L'unité de gestion 105 peut alors commander l'interruption du courant de décharge de la batterie. Chaque module de contrôle 103ᵢ est par exemple adapté à détecter la fin de la phase de décharge, par exemple au moyen d'un capteur du courant ou du signe du courant circulant sur le noeud a1 du circuit d'interconnexion 101ᵢ correspondant, et à commander en conséquence la réouverture de l'interrupteur M2 et la fermeture du transistor M1 du circuit d'interconnexion, de façon à reconnecter les modules Ei en série entre les bornes V+ et V- de la batterie.

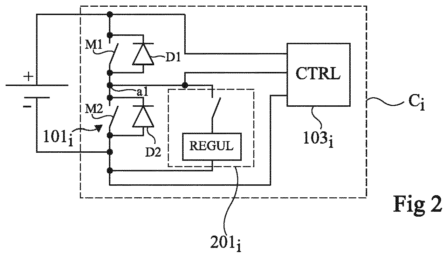

La figure 2 est un schéma électrique partiel d'un autre exemple d'un mode de réalisation d'une batterie électrique munie d'un système électronique de gestion. La batterie de la figure 2 comprend les mêmes éléments que la batterie de la figure 1, et diffère de la batterie de la figure 1 principalement en ce qu'elle comprend en outre, associé à chaque module de stockage d'énergie Ei de la batterie, un circuit de régulation 201ᵢ (REGUL) commandable par le circuit de contrôle 103ᵢ, adapté à réguler une tension prédéfinie entre la borne a1 du circuit d'interconnexion 101i et la borne négative du module Ei. Le circuit de régulation est par exemple disposé sur la même carte de circuit imprimé Cᵢ que le circuit d'interconnexion 101ᵢ et le circuit de contrôle 103ᵢ. Par souci de simplification, seul un module de stockage d'énergie Ei, ainsi que les circuits d'interconnexion 101ᵢ, de contrôle 103ᵢ, et de régulation 201ᵢ associés à ce module, ont été représentés sur la figure 2.

A titre d'exemple, les interrupteurs M1 et M2 du circuit d'interconnexion 101ᵢ sont des transistors MOS, et le circuit de régulation est un circuit adapté à commander le transistor M2 en régime linéaire, c'est-à-dire dans un état partiellement passant, pour forcer entre ses bornes de conduction principales (source, drain) une tension de régulation prédéfinie. Le circuit de régulation 201ᵢ peut être alimenté par la même source d'énergie que le circuit de contrôle 103ᵢ, par exemple par le module Ei auquel il est associé. A titre d'exemple, le circuit de régulation 201ᵢ peut faire partie du circuit de contrôle 103ᵢ.

Des exemples de procédés de contrôle de la batterie de la figure 2 vont être décrits. Comme pour la batterie de la figure 1, tous ces procédés de contrôle sont basés sur l'aptitude de l'unité de gestion 105 à détecter le shuntage d'un module Ei par détection d'une chute de tension correspondante entre les bornes V+ et V- de la batterie.

### Troisième exemple - recharge de la batterie

Lors d'une phase de recharge, un courant de recharge circule entre la borne négative V- et la borne positive V+ de la batterie, éventuellement par l'intermédiaire de l'unité de gestion 105. Si la batterie fonctionne normalement, les interrupteurs M1 des circuits d'interconnexion 101ᵢ sont tous à l'état fermé, et les interrupteurs M2 des circuits d'interconnexion 101ᵢ sont tous à l'état ouvert, de sorte que le courant de recharge passe à travers tous les modules Ei de la batterie. Lorsque la tension d'un premier module Ei atteint un seuil prédéfini correspondant à sa tension de pleine charge, le circuit de contrôle 103ᵢ correspondant le détecte, et commande en conséquence l'ouverture de l'interrupteur M1 et la fermeture de l'interrupteur M2 du circuit d'interconnexion 101ᵢ associé au module. Le module Ei se trouve alors isolé du reste de la batterie, et la tension aux bornes de la batterie chute d'une valeur sensiblement égale à la tension du module Ei. L'unité de gestion 105 détecte cette chute de tension et peut en déduire que la fin de la recharge de la batterie approche. L'unité de gestion 105 commande alors la diminution du courant de recharge, de façon que la fin de la recharge soit réalisée sous un courant réduit par rapport au courant appliqué pendant le reste de la phase de recharge. Chaque circuit de contrôle 103ᵢ est adapté à détecter que la batterie est en régime de fin de charge, c'est-à-dire qu'elle reçoit un courant de recharge réduit, au moyen d'un capteur du courant circulant sur le noeud a1 du circuit d'interconnexion 101ᵢ correspondant. A titre d'exemple, le circuit de contrôle 103ᵢ considère que la batterie est en régime de fin de charge lorsque le courant circulant sur le noeud a1 est inférieur à un seuil. Lorsque la tension d'un module Ei est à son seuil de pleine charge et que la batterie est en régime de fin de charge, le circuit de contrôle 103ᵢ du module le détecte, et commande en conséquence le circuit de régulation 201ᵢ pour appliquer aux bornes de l'interrupteur M2 une tension prédéfinie V_{regul} strictement positive, par exemple supérieure ou égale à 1 V. La tension V_{regul} est par exemple inférieure à la tension de pleine charge du module Ei. Dans le cas où la tension de régulation V_{regul} ne serait pas générée par l'interrupteur M2 lui-même fonctionnant dans un régime partiellement passant, mais par une autre source de tension, l'interrupteur M2 peut être ouvert pendant la phase de régulation de façon à ne pas court-circuiter cette source de tension. Pendant la phase de fin de recharge de la batterie, chaque fois qu'un nouveau module Ei atteint sa tension de pleine charge, ce module est shunté, et la tension V_{regul} est appliquée entre le noeud a1 du circuit d'interconnexion 101ᵢ et la borne négative du module Ei, en substitution de la tension du module Ei. Lorsque la tension aux bornes de la batterie atteint une valeur sensiblement égale à n*V_{regul}, par exemple à 0,5*V_{regul} près et de préférence à 0,1*V_{regul} près, où n est le nombre de modules Ei de la batterie, l'unité de gestion 105 peut en déduire que tous les modules Ei sont chargés, et interrompre en conséquence le courant de recharge. La batterie est alors chargée et équilibrée. Chaque module de contrôle 103ᵢ est par exemple adapté à détecter la fin de la recharge, par exemple au moyen d'un capteur du courant ou du signe du courant circulant sur le noeud a1 du circuit d'interconnexion 101ᵢ correspondant, et à commander en conséquence la réouverture de l'interrupteur M2 et la fermeture du transistor M1 du circuit d'interconnexion, ainsi que l'interruption de la régulation de tension par le circuit de régulation 201ᵢ, de façon à reconnecter les modules Ei en série entre les bornes V+ et V-de la batterie.

### Quatrième exemple - décharge de la batterie

Lors d'une phase de décharge de la batterie, un courant circule entre la borne positive V+ et la borne négative V- de la batterie, éventuellement par l'intermédiaire de l'unité de gestion 105. Si la batterie fonctionne normalement, les interrupteurs M1 des circuits d'interconnexion 101ᵢ sont tous à l'état fermé, et les interrupteurs M2 des circuits d'interconnexion 101ᵢ sont tous à l'état ouvert, de sorte que tous les modules Ei de la batterie contribuent à la fourniture du courant de décharge. Lorsque la tension d'un premier module Ei atteint un seuil prédéfini correspondant à son état déchargé, le circuit de contrôle 103ᵢ correspondant le détecte, et commande en conséquence l'ouverture de l'interrupteur M1 et la fermeture de l'interrupteur M2 du circuit d'interconnexion 101ᵢ associé au module. Le module Ei se trouve alors isolé du reste de la batterie, et la tension aux bornes de la batterie chute d'une valeur sensiblement égale à la tension du module Ei. L'unité de gestion 105 détecte cette chute de tension et peut en déduire que la batterie approche de son état déchargé. L'unité de gestion 105 peut alors commander l'interruption du courant de décharge, et indiquer à l'utilisateur que la batterie doit être rechargée. A titre de variante, l'unité de gestion 105 peut commander la diminution du courant de décharge, de façon que la fin de la décharge soit réalisée sous un courant réduit par rapport au courant de décharge précédent la commutation du premier circuit d'interconnexion 101ᵢ. Chaque circuit de contrôle 103ᵢ peut être adapté à détecter que la batterie est en régime de fin de décharge, au moyen d'un capteur du courant circulant sur le noeud a1 du circuit d'interconnexion 101ᵢ correspondant. A titre d'exemple, le circuit de contrôle 103ᵢ considère que la batterie est en régime de fin de décharge lorsque le courant circulant sur le noeud a1 est inférieur à un seuil. Lorsque la tension d'un module Ei est à son seuil de décharge, et que la batterie est en régime de fin de décharge, le circuit de contrôle 103ᵢ du module le détecte, et commande en conséquence le circuit de régulation 201ᵢ pour appliquer aux bornes de l'interrupteur M2 une tension de régulation V_{regul} strictement positive, par exemple inférieure à la tension du module Ei à l'état déchargé. Pendant toute la phase de fin de décharge de la batterie, chaque fois qu'un nouveau module Ei atteint sa tension de décharge, ce module est shunté, et la tension V_{regul} est appliquée entre le noeud a1 du circuit d'interconnexion 101ᵢ et la borne négative du module Ei, en substitution de la tension du module Ei. Lorsqu'un nombre n1 prédéfini de modules Ei a été shunté, avec n1≤ n, l'unité de gestion 105 interrompt le courant de décharge. Chaque module de contrôle 103ᵢ est par exemple adapté à détecter la fin de la phase de décharge, par exemple au moyen d'un capteur du courant ou du signe du courant circulant sur le noeud a1 du circuit d'interconnexion 101ᵢ correspondant, et à commander en conséquence la réouverture de l'interrupteur M2 et la fermeture du transistor M1 du circuit d'interconnexion, ainsi que l'interruption de la régulation de tension par le circuit de régulation 201ᵢ, de façon à reconnecter les modules Ei en série entre les bornes V+ et V- de la batterie.

### Cinquième exemple - recharge ou décharge de la batterie

A titre de variante, si les unités de régulation 201ᵢ sont adaptées à réguler la tension aux bornes de l'interrupteur M2 sous un courant de recharge ou de décharge élevé, la fin de la phase de recharge ou de décharge de la batterie peut être réalisée sans réduire le courant de recharge ou de décharge. Dans ce cas, lorsque la tension d'un premier module Ei atteint un seuil prédéfini correspondant à sa tension de pleine charge ou à sa tension de décharge, le circuit de contrôle 103ᵢ correspondant le détecte, et commande en conséquence le shuntage du module Ei. La régulation de la tension aux bornes de l'interrupteur M2 peut être commandée simultanément, sans attendre une diminution du courant de recharge ou de décharge de la batterie.

Un avantage du mode de réalisation de la figure 2 est que la prévision des circuits de régulation 201ᵢ permet de maintenir un niveau minimal de tension tout au long des phases de recharge et de décharge de la batterie, même lorsque de nombreux modules Ei sont shuntés. Ceci permet de rendre la batterie compatible avec des chargeurs ou des charges nécessitant de voir à leurs bornes une tension minimale pour fonctionner correctement.

Dans les modes de réalisation des figures 1 et 2, chaque circuit de contrôle 103ᵢ peut en outre être adapté à détecter une éventuelle défaillance du module Ei auquel il est associé, par exemple par détection d'une tension anormale aux bornes du module, ou par détection d'une élévation anormale de la température du module. Chaque circuit de contrôle 103ᵢ peut être configuré pour, lorsqu'il détecte une défaillance du module Ei auquel il est associé, par exemple au cours d'une phase de recharge ou de décharge de la batterie, ou à tout autre moment, commander l'ouverture définitive de l'interrupteur M1 et la fermeture définitive de l'interrupteur M2. Par définitive, on entend ici que les interrupteurs M1 et M2 associés au module Ei défaillant ne seront pas commutés à nouveau à l'issue de la prochaine phase de recharge ou de décharge de la batterie. Ainsi, le module défaillant Ei restera shunté jusqu'à son éventuel remplacement par un nouveau module. L'unité de gestion 105 peut être adaptée à détecter, par exemple après chaque phase de recharge de la batterie, si la batterie comprend des modules défaillants et combien de modules sont défaillants. En effet, après une phase de recharge de la batterie, lorsque les modules Ei non défaillants sont reconnectés en série entre les bornes V+ et V- de la batterie, une tension sensiblement égale à la somme des tensions des modules Ei connectés s'établit aux bornes de la batterie. L'unité de gestion 105 peut alors déterminer combien de modules Ei sont connectés en série entre les bornes V+ et V- de la batterie, et en déduire combien de modules sont restés shuntés (et donc sont défaillants). Le nombre de modules valides de la batterie peut être mémorisé par l'unité de gestion 105. On notera que dans le mode de réalisation de la figure 2, si un module défaillant Ei est shunté pendant une phase de recharge de la batterie, la tension aux bornes de la batterie peut ne jamais atteindre la tension n*V_{regul} permettant à l'unité de gestion 105 de savoir que la charge est terminée. Dans ce cas, une minuterie peut être prévue pour interrompre la recharge de la batterie lorsque l'unité de gestion 105 détecte que la tension aux bornes de la batterie est restée stable pendant une certaine durée, malgré l'application d'un courant de recharge dans la batterie. Des mécanismes similaires de détection du nombre de modules défaillants peuvent être prévus lors des phases de décharge de la batterie.

Outre la simplification du système de gestion de la batterie et la réduction du nombre de câbles à l'intérieur de la batterie, les modes de réalisation décrits ont pour avantage que la batterie peut continuer à fonctionner (avec une capacité totale réduite) même lorsque des modules Ei sont défaillants.

Des modes de réalisation particuliers ont été décrits. Diverses variantes et modifications apparaîtront à l'homme de l'art. En particulier, les modes de réalisation décrits ne se limitent pas aux exemples de procédés de gestion de la batterie décrits ci-dessus. A titre de variante, chaque circuit de contrôle 103i peut comporter un capteur de la température du module Ei auquel il est associé, et des procédés de gestion de la température à l'intérieur de la batterie peuvent être mis en oeuvre. Par exemple, lors des différentes phases de fonctionnement de la batterie, si la température d'un module Ei de la batterie sort d'une plage de fonctionnement prédéfinie, le circuit de contrôle 103i peut actionner les interrupteurs M1 et M2 de façon à shunter temporairement le module Ei jusqu'à ce que sa température revienne à une valeur appropriée.

De plus, l'unité de gestion 105 peut comporter des éléments et des fonctionnalités autres que celles qui ont été décrites. A titre d'exemple, l'unité de gestion 105 peut mettre en oeuvre un comptage des charges entrant ou sortant de la batterie, par l'intermédiaire d'un capteur (non représenté) du courant circulant entre les bornes V+ et V- de la batterie, afin de détecter une éventuelle diminution de la capacité totale de stockage de charges de la batterie.

## Revendications

1. Batterie électrique comprenant :
une pluralité de modules (Ei) de stockage d'énergie électrique destinés à être connectés en série ;
associé à chaque module (Ei), un circuit d'interconnexion (101ᵢ) comportant des premier (M1) et deuxième (M2) interrupteurs connectés en série entre une borne positive (+) et une borne négative (-) du module, les deuxièmes interrupteurs (M2) des différents circuits d'interconnexion (101ᵢ) étant connectés en série entre une borne positive (V+) et une borne négative (V-) de la batterie ;
associé à chaque circuit d'interconnexion (101ᵢ), un circuit autonome de contrôle (103ᵢ) adapté à commander l'ouverture du premier interrupteur (M1) et la fermeture du deuxième interrupteur (M2) de façon à shunter le module (Ei) lorsque la tension aux bornes du module (Ei) atteint un seuil ; et
une unité de gestion (105) connectée aux bornes positive et négative du système, adaptée, lorsqu'un module (Ei) est shunté, à détecter une chute de tension correspondante entre les bornes positive (V+) et négative (V-) de la batterie, et à contrôler en conséquence un courant de recharge ou de décharge de la batterie,
la batterie ne comportant pas de liaison de communication de données entre les circuits de contrôle (103ᵢ) et l'unité de gestion (105).

2. Batterie selon la revendication 1, ne comportant pas de liaison de communication de données entre les différents circuits de contrôle (103ᵢ).

3. Batterie selon La revendication 1 ou 2, dans laquelle chaque circuit de contrôle (103ᵢ) est adapté à déterminer le sens du courant circulant sur le noeud intermédiaire (a1) entre les premier (M1) et deuxième (M2) interrupteurs du circuit d'interconnexion (101ᵢ) auquel il est associé.

4. Batterie selon la revendication 3, dans laquelle chaque circuit de contrôle (103ᵢ) est adapté à commander l'ouverture du deuxième interrupteur (M2) et la fermeture du premier interrupteur (M1) lorsque le courant circulant sur le noeud intermédiaire (a1) du circuit d'interconnexion (101ᵢ) auquel il est associé change de sens.

5. Batterie selon l'une quelconque des revendications 1 à 4, dans laquelle l'unité de gestion (105) est adaptée à réduire un courant de recharge ou de décharge de la batterie lorsqu'elle détecte le shuntage d'un module (Ei).

6. Batterie selon l'une quelconque des revendications 1 à 5, comprenant en outre, associé à chaque module (Ei), un circuit de régulation (201ᵢ) adapté à appliquer une tension de régulation (V_{regul}) prédéfinie aux bornes du deuxième interrupteur (M2) du circuit d'interconnexion (101ᵢ) associé au module.

7. Batterie selon la revendication 6, dans laquelle le circuit de régulation (201ᵢ) est adapté à commander le deuxième interrupteur (M2) à un état partiellement fermé pour générer la tension de régulation.

8. Batterie selon la revendication 6 ou 7, dans laquelle chaque circuit de contrôle (103ᵢ) est adapté à commander l'application de la tension de régulation (V_{regul}) aux bornes du deuxième interrupteur (M2) par le circuit de régulation (201ᵢ) correspondant, lorsque la tension aux bornes du module (Ei) correspondant atteint un seuil et que le courant circulant dans le deuxième interrupteur (M2) est inférieur à un seuil.

9. Batterie selon l'une quelconque des revendications 1 à 8, dans laquelle les premiers (M1) et deuxièmes (M2) interrupteurs sont des transistors MOS.

## Patentansprüche

1. Eine elektrische Batterie, die Folgendes aufweist:
eine Vielzahl von elektrischen Energiespeichereinheiten (Ei), die geeignet sind, in Reihe geschaltet zu werden;
assoziiert mit jeder Einheit (Ei) eine Verbindungsschaltung (101ᵢ), die erste (M1) und zweite (M2) Schalter aufweist, die zwischen einem positiven Anschluss (+) und einem negativen Anschluss (-) der Einheit in Reihe geschaltet sind, wobei die zweiten Schalter (M2) der verschiedenen Verbindungsschaltungen (101i) zwischen einem positiven Anschluss (V+) und einem negativen Anschluss (V-) der Batterie in Reihe geschaltet sind;
assoziiert mit jeder Verbindungsschaltung (101i) eine unabhängige Steuerschaltung (103ᵢ), die geeignet ist, das Abschalten des ersten Schalters (M1) und das Anschalten des zweiten Schalters (M2) zum Überbrücken der Einheit (Ei) zu bewirken, wenn die Spannung über die Einheit (Ei) einen Schwellenwert erreicht; und
eine Verwaltungseinheit (105), die mit den positiven und negativen Anschlüssen des Systems verbunden ist und die in der Lage ist, einen entsprechenden Spannungsabfall zwischen den positiven (V+) und negativen (V-) Anschlüssen der Batterie zu detektieren, wenn die Einheit (Ei) überbrückt ist, und entsprechend einen Batterieauflade- oder -entladestrom zu steuern, wobei die Batterie keine Datenkommunikationsverbindung zwischen den Steuerschaltungen (103ᵢ) und der Verwaltungseinheit (105) aufweist.

2. Batterie nach Anspruch 1, die keine Datenkommunikationsverbindung zwischen den verschiedenen Steuerschaltungen (103ᵢ) aufweist.

3. Batterie nach Anspruch 1 oder 2, wobei jede Steuerschaltung (103ᵢ) geeignet ist, die Richtung des Stromflusses an dem Zwischenknoten (a1) zwischen den ersten (M1) und zweiten (M2) Schaltern der damit assoziierten Verbindungsschaltung (101i) zu bestimmen.

4. Batterie nach Anspruch 3, wobei jede Steuerschaltung (103ᵢ) geeignet ist, das Abschalten des zweiten Schalters (M2) und das Anschalten des ersten Schalters (M1) zu bewirken, wenn der Stromfluss an dem Zwischenknoten (a1) der damit assoziierten Verbindungsschaltung (101ᵢ) die Richtung ändert.

5. Batterie nach einem der Ansprüche 1 bis 4, wobei die Verwaltungseinheit (105) geeignet ist, einen Batterieauflade- oder -entladestrom zu verringern, wenn sie das Überbrücken einer Einheit (Ei) detektiert.

6. Batterie nach einem der Ansprüche 1 bis 5, die ferner Folgendes aufweist: eine mit jeder Einheit (Ei) assoziierte Regelschaltung (201ᵢ), die geeignet ist, eine vorgestimmte Regelspannung (V_{regul}) über den zweiten Schalter (M2) der mit der Einheit assoziierten Verbindungsschaltung (101ᵢ) anzulegen.

7. Batterie nach Anspruch 6, wobei die Regelschaltung (201ᵢ) geeignet ist, den zweiten Schalter (M2) in einen teilweisen Ein-Zustand zu bringen, um die Regelspannung zu erzeugen.

8. Batterie nach Anspruch 6 oder 7, wobei jede Steuerschaltung (103ᵢ) geeignet ist, das Anlegen der Regelspannung (V_{regul}) über den zweiten Schalter (M2) durch die entsprechende Regelschaltung (201ᵢ) anzuordnen, wenn die Spannung über der entsprechenden Einheit (Ei) einen Schwellenwert erreicht und der Stromfluss durch den zweiten Schalter (M2) geringer ist als ein Schwellenwert.

9. Batterie nach einem der Ansprüche 1 bis 8, wobei die ersten (M1) und zweiten (M2) Schalter MOS-Transistoren sind.

## Claims

1. An electric battery comprising:
a plurality of electrical energy storage units (Ei)intended to be serially connected;
associated with each unit (Ei), an interconnection circuit (101ᵢ) comprising first (M1) and second (M2) switches series-connected between a positive terminal (+) and a negative (-) terminal of the unit, the second switches (M2) of the different interconnection circuits (101ᵢ) being series-connected between a positive terminal (V+) and a negative terminal (V-) of the battery;
associated with each interconnection circuit (101ᵢ), a self-contained control circuit (103ᵢ) capable of causing the turning off of the first switch (M1) and the turning on of the second switch (M2) to shunt the unit (Ei) when the voltage across the unit (Ei) reaches a threshold; and
a management unit (105) connected to the positive and negative terminals of the system, capable, when a unit (Ei) is shunted, of detecting a corresponding voltage drop between the positive (V+) and negative (V-) terminals of the battery, and of accordingly controlling a battery recharge or discharge current,
the battery comprising no data communication link between the control circuits (103ᵢ) and the management unit (105).

2. The battery of claim 1, comprising no data communication link between the different control circuits (103ᵢ).

3. The battery of claim 1 or 2, wherein each control circuit (103ᵢ) is capable of determining the direction of the current flowing at the intermediate node (a1) between the first (M1) and second (M2) switches of the interconnection circuit (101ᵢ) associated therewith.

4. The battery of claim 3, wherein each control circuit (103i) is capable of causing the turning off of the second switch (M2) and the turning on of the first switch (M1) when the current flowing at the intermediate node (a1) of the interconnection circuit (101ᵢ) associated therewith changes direction.

5. The battery of any of claims 1 to 4, wherein the management unit (105) is capable of decreasing a battery recharge or discharge current when it detects the shunting of a unit (Ei).

6. The battery of any of claims 1 to 5, further comprising, associated with each unit (Ei), a regulation circuit (201ᵢ) capable of applying a predefined regulation voltage (V_{regul}) across the second switch (M2) of the interconnection circuit (101ᵢ) associated with the unit.

7. The battery of claim 6, wherein the regulation circuit (201ᵢ) is capable of placing the second switch (M2) in a partially on state to generate the regulation voltage.

8. The battery of claim 6 or 7, wherein each control circuit (103ᵢ) is capable of ordering the application of the regulation voltage (V_{regul}) across the second switch (M2) by the corresponding regulation circuit (201ᵢ), when the voltage across the corresponding unit (Ei) reaches a threshold and the current flowing through the second switch (M2) is lower than a threshold.

9. The battery of any of claims 1 to 8, wherein the first (M1) and second (M2) switches are MOS transistors.
